# EUROPÄISCHE PATENTSCHRIFT

(11) **EP 2 188 101 B1**
(45) Veröffentlichungstag und Bekanntmachung des Hinweises auf die Patenterteilung: **01.01.2014**
(21) Anmeldenummer: 08802239.7
(22) Anmeldetag: 16.09.2008
(51) Int. Cl.: B29C 45/16, B29C 45/14

(54) **VERFAHREN ZUM EINBRINGEN EINER DICHTUNG EINES STECKVERBINDUNGSTEILES**
METHOD FOR THE INTRODUCTION OF A SEAL INTO A PLUG CONNECTOR PART
PROCEDE PERMETTANT D'INTRODUIRE UN JOINT DANS UN CONNECTEUR A FICHE

(30) Priorität: 19.09.2007 EP 07018360
(43) Veröffentlichungstag der Anmeldung: 26.05.2010
(73) Patentinhaber: ifw Manfred Otte GmbH, 4563 Micheldorf (AT)
(72) Erfinder: EBNER, Josef, 4563 Micheldorf (AT); EIGRUBER, Sebastian, 4052 Ansfelden (AT); DEMMEL, Andreas, 4694 Ohlsdorf (AT)
(74) Vertreter: Landgraf, Elvira
(86) Internationale Anmeldenummer: PCT/EP2008/007706
(87) Internationale Veröffentlichungsnummer: WO 2009/036945

(56) Entgegenhaltungen:
- EP-A- 0 326 719
- EP-A- 1 386 716
- WO-A-00/76741
- WO-A-03/031861
- CH-A- 298 986
- DE-A1- 2 320 098
- DE-A1- 2 845 308
- DE-A1- 2 936 016
- DE-A1- 3 612 255
- FR-A- 2 462 261
- FR-A- 2 572 676
- GB-A- 2 192 577
- GB-A- 2 192 578
- JP-A- 2 273 216
- JP-A- 62 037 118
- JP-A- 2007 296 801
- US-A- 4 173 362
- US-A- 5 160 474
- US-A1- 2006 284 336
- US-B1- 6 224 364

## Beschreibung

Die Erfindung betrifft ein Verfahren zum Einbringen einer Dichtung eines Steckverbindungsteils.

Dichtungen für Steckverbindungsteile werden nach dem derzeitigen Stand der Technik nach Herstellung eines Steckverbindungsteils im Gussverfahren entweder händisch oder mittels eines Bestückungsautomaten an der vorgesehenen Stelle des Steckverbindungsteils platziert.

Ferner ist bekannt nach Herstellung des Steckverbindungsteils dieses in eine zweite Form oder in ein zweites Formnest zu transferieren und in diesem zweiten Formnest die Dichtung im Spritzguss anzuspritzen.

Aus WO 03/031861 A ist ein Verfahren zum Einbringen eines Dichtungsrings bekannt, wobei der Dichtring in die Form eingebracht wird und anschließend das Steckverbindungsteil hergestellt wird.

Aus US 4 173 362 ist ein Rohrverbindungsstück bekannt, das einen Dichtungsring aufweist.

Aus EP 1 386 716 A ist ein Verfahren zur Herstellung eines Spritzgussformlings mit mehreren unterschiedlichen Teilen bekannt.

Aus DE 2845308 A ist Fitting oder dergleichen aus formstabile Kunststoff für Rohrverbindungen mit mindestens einem muffenartigen Endstück, und ein Verfahren zu dessen Herstellung bekannt, wobei in das Endstück ein glattes Anschluss-Rohrstück unter Zwischenschaltung eines elastischen Dichtungsringes ein schiebbar ist. Aus GB 2 192 577 und GB 2 192 578 ein Verfahren zum Einbringen einer Dichtung, wobei der Kern der Spritzgussform soweit bewegt wird, dass er die Kavität für den Dichtungsring freigibt, und anschließend die Dichtung eingespritzt wird.

Aus EP 0 326 719 A ist ein Verfahren zur Herstellung eines Dichtungsrings durch ein Spritzgussverfahren bekannt, wobei der Dichtungsring durch in der Spritzgussform hergestellt wird.

Aus DE 29 36 016 A ist ein Werkzeug zum Herstellen eines Fittings bekannt, wobei die Kernform entsprechend der Innenkontur des Fittings stufenförmig abgesetzt ist, und innerhalb der Außenform verschiebbar ausgeführt ist, dass der Formraum des Dichtungsringes bestimmt wird.

Aufgabe der Erfindung war es ein Verfahren zum Einbringen einer Dichtung eines Steckverbindungsteils bereitzustellen, bei dem die Dichtung ohne Umlegen des Steckverbindungsteils eingebracht werden kann.

Gegenstand der Erfindung ist daher ein Verfahren zum Einbringen einer Dichtung eines Steckverbindungsteils, dadurch gekennzeichnet, dass vorerst die Hartkomponente in der Spritzgussform zu einem Steckverbindungsteil gespritzt wird und solange die Hartkomponente noch in plastischem Zustand ist, die Dichtungskammer freigegeben wird und die Weichkomponente eingespritzt wird, wodurch die Hartkomponente nach außen gedrückt wird und die Dichtungskammer endgültig formt.

Dadurch kann die Herstellung eines Steckverbindungsteils mit Dichtung vereinfacht und rationalisiert werden.

In einer bekannten Ausführungsform wird der fertige Dichtring in das Werkzeug eingelegt. Dies kann per Hand oder mittels eines Automaten erfolgen. Anschließend wird die Form geschlossen und die Außenhaut (das Steckverbindungsteil) im Spritzguss hergestellt.

Nach dem Öffnen der Form kann das Steckverbindungsteil mit eingebrachter Dichtung entnommen oder ausgeworfen werden.

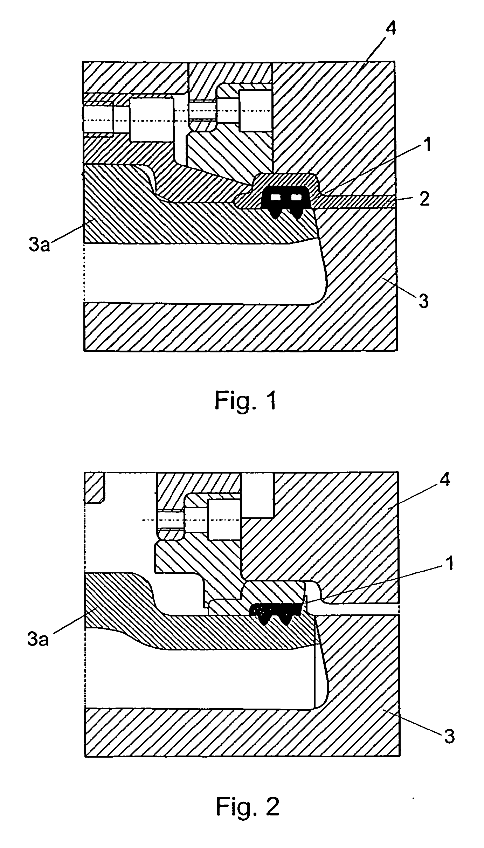

Ein derartiges Verfahren ist in Fig. 1 dargestellt.

In einer weiteren bekannten Ausführungsform wird in der Form zuerst die Dichtung durch Spritzgießen der Weichkomponente gebildet. Dabei wird in der Form nur der Bereich freigelassen, in den die Dichtung gespritzt wird, nämlich die Dichtungskammer.

Anschließend wird jener Bereich freigegeben, in dem das Steckverbindungsteil spritzgegossen wird. Nach diesem Spritzvorgang kann nach Abkühlen der Formmasse das fertige Steckverbindungsteil mit der Dichtung entnommen bzw. ausgeworfen werden.

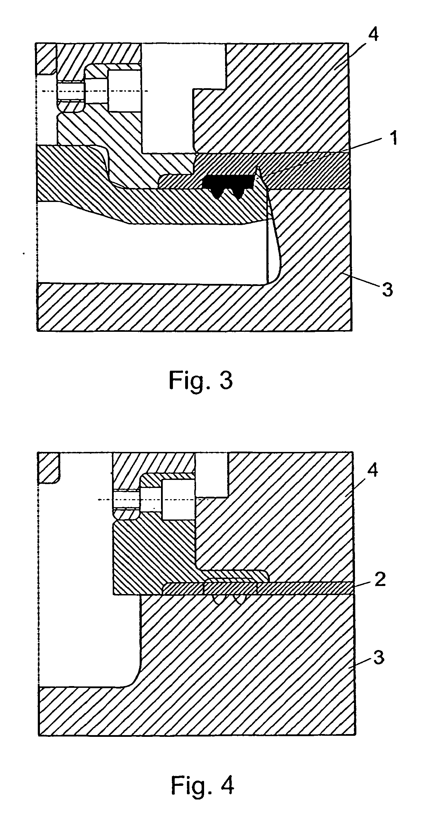

Ein derartiges Verfahren ist in den Fig. 2 und 3 dargestellt.

In einer weiteren bekannten Ausführungsform wird zuerst die Außenhaut (das Steckverbindungsteil) gespritzt. Nach ausreichendem Aushärten des Steckverbindungsteils wird die Dichtungskammer freigegeben und die Weichkomponente (Dichtung) eingespritzt.

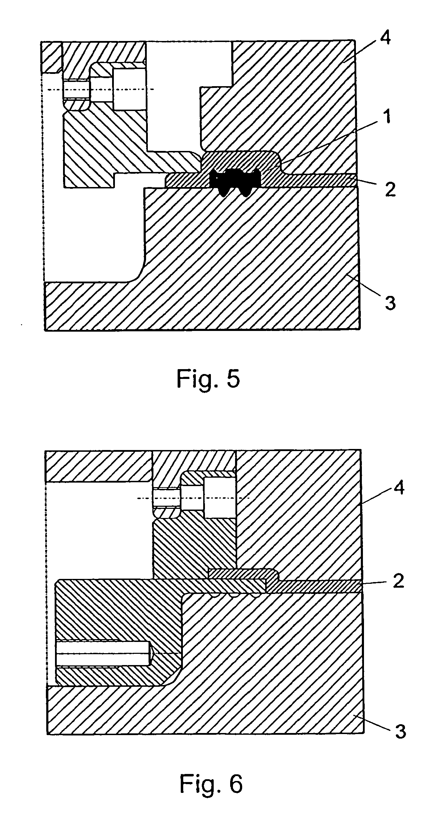

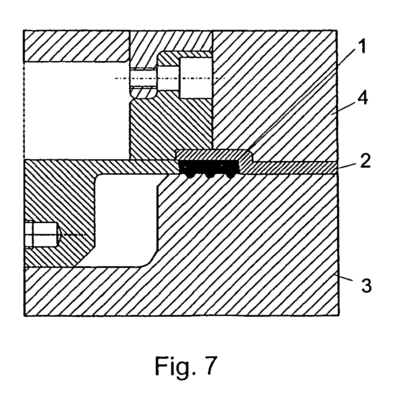

Ein derartiges Verfahren ist in den Fig. 6 und 7 dargestellt.

In einer Ausführungsform des erfindungsgemäßen Verfahrens wird in der Form im ersten Schritt die Hartkomponente des Steckverbindungsteils verarbeitet. Anschließend wird, solange sich das Steckverbindungsteil noch in plastischem Zustand befindet, die Dichtungskammer freigegeben und die Weichkomponente eingespritzt.

Dabei wird die Hartkomponente durch das Einspritzen der Weichkomponente im Bereich der Dichtungskammer nach außen gedrückt und somit die Dichtungskammer geformt.

Nach Abkühlen und Öffnen der Form kann das fertige Steckverbindungsteil aus der Form entnommen werden.

Ein derartiges Verfahren ist in den Fig. 4 und 5 dargestellt.

Die Bewegungen im Werkzeug können hydraulisch, pneumatisch oder elektrisch erfolgen.

In den Figuren 4, 5, 8 und 9 sind die Ausführungsformen des erfindungsgemäßen Verfahrens dargestellt. Darin bedeuten 1 die Weichkomponente (Dichtung), 2 die Außenhaut, und 3 den Kern, 3a ein Kernsegment, 4 die Außenform.

Vorzugsweise können derartige Verfahren in einer Spritzgussform durchgeführt werden, die einen Spreizkern oder einen Faltkern aufweist.

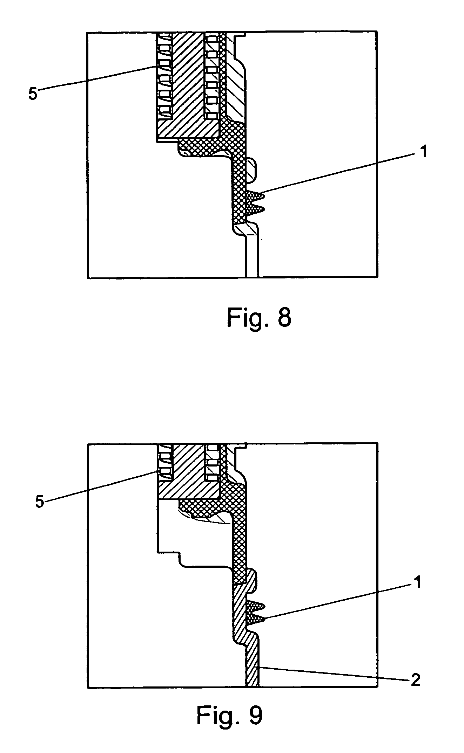

In einer besonderen Ausführungsform des Verfahrens, die in den Figuren 8 und 9 dargestellt ist, wird durch eine besondere Vorrichtung, nämlich die federnde Lagerung des Rings eine besonders vorteilhafte Herstellungsweise realisiert.

Um bei der Fittingherstellung die Kavität für die 2. Komponente freizugeben, muss ein Ring zurückgezogen werden. Um diesen Ring zu betätigen war bis jetzt ein zusätzlicher Mechanismus am Kernzug oder ein separater Antrieb mit zusätzlicher Steuerung notwendig.

Um dieses Verfahren zu vereinfachen wird nun der Ring gefedert im Werkzeug eingebracht.

Da beim Einspritzen der ersten Komponente nur radiale Kräfte infolge der Spitzdrucke auftreten, bleibt der Ring in seiner Ursprungsposition stehen.

Wird die 2. Komponente gespritzt, wirkt auf den Ring durch den Spritzdruck eine axiale Kraft, welche den Ring bis zu seiner Anschlagposition bewegt.

Um beim Coreback-2K-Verfahren bei der Fittingherstellung die Kavität für die 2. Komponente freizugeben, wird ein zusätzlicher Mechanismus (Zwangsverriegelung) im Kernzug angebracht. Die Betätigung erfolgt durch einen Hydraulikzylinder, welcher auch zum Ziehen des Kernes benötigt wird. Die zusätzliche Zwischenposition gibt mittels eines Endschalters am Kernzug ein Signal an die Maschine um die Kernbewegung an dieser Stelle zu stoppen, uns erst nach Spritzen der 2. Komponente fortzusetzen.

Der zusätzliche Mechanismus, der Endschalter und die Maschinensteuerung der zusätzlichen Zwischenposition fallen weg, da der Ring durch den Spritzdruck der Schmelze der 2. Komponente zurückgedückt wird.

Weiters kann dieses Verfahren auch dann eingesetzt werden wenn die Kerne mittels Öffnungsbewegung betätigt werden (z.B. Kulissen), und somit kein Hydraulikzylinder zur Verfügung steht der die notwendige Bewegung des Ringes aufbringt.

In den Figuren 1 bis 9 sind Ausführungsformen des erfindungsgemäßen Verfahrens als auch bekannter Verfahren dargestellt. Darin bedeutet 1 die Weichkomponente (Dichtung), 2 die Außenhaut, und 3 den Kern, 3a ein Kernsegment, 4 die Außenform, 5 die Feder.

Die nach dem erfindungsgemäßen Verfahren hergestellten Steckverbindungsteile können für Trinkwasser- oder Abwasserleitungen, elektrische Schutzrohre, Fluidleitungen, wie Gas-, Abgas-, Luft oder Druckluftleitungen verwendet werden.

## Patentansprüche

1. Verfahren zum Einbringen einer Dichtung eines Steckverbindungsteils, **dadurch gekennzeichnet, dass** vorerst die Hartkomponente in der Spritzgussform zu einem Steckverbindungsteil gespritzt wird und solange die Hartkomponente noch in plastischem Zustand ist, die Dichtungskammer freigegeben wird und die Weichkomponente eingespritzt wird, wodurch die Hartkomponente nach außen gedrückt wird und die Dichtungskammer endgültig formt.

2. Verfahren nach Anspruch 1, **dadurch gekennzeichnet, dass** eine Spritzgussform, die einen Formkern, der aus Segmenten besteht, verwendet wird.

3. Verfahren nach einem der Ansprüche 1 oder 2, **dadurch gekennzeichnet, dass** das Freigeben der Dichtungskammer durch einen gefederten Ring selbsttätig erfolgt.

4. Verwendung des Verfahrens nach einem der Ansprüche 1 bis 3 zur Herstellung von Steckverbindungsteilen für Trinkwasser- oder Abwasserleitungen, elektrische Schutzrohre, Fluidleitungen, wie Gas-, Abgas-, Luft oder Druckluftleitungen.

## Claims

1. Method for the introduction of a seal into a plug connector part, **characterized in that** first the hard component is moulded in the injection mould to form a plug connector part and, while the hard component is still in the plastic state, the sealing chamber is opened and the soft component is injected, whereby the hard component is forced outwards and the sealing chamber is given its final form.

2. Method according to Claim 1, **characterized in that** an injection mould that has a segmental mould core is used.

3. Method according to either of Claims 1 and 2, **characterized in that** the opening of the sealing chamber takes place automatically by a sprung ring.

4. Use of the method according to one of Claims 1 to 3 for the production of plug connector parts for drinking-water or waste-water lines, electrical conduits or fluid lines, such as gas, exhaust-gas, air or compressed-air lines.

## Revendications

1. Procédé servant à mettre en place un joint d'étanchéité d'un élément de connexion à fiches, **caractérisé en ce qu'**en premier lieu le composant dur est coulé par injection dans le moule de moulage par injection pour obtenir un élément de connexion à fiches et tant que le composant dur se trouve encore dans l'état plastique, la chambre d'étanchéité est libérée et le composant mou est injecté, ce qui permet de pousser vers l'extérieur le composant dur, qui façonne de manière définitive la chambre d'étanchéité.

2. Procédé selon la revendication 1, **caractérisé en ce qu'**on utilise un moule de moulage par injection, qui présente un noyau de moule constitué de segments.

3. Procédé selon l'une quelconque des revendications 1 ou 2, **caractérisé en ce que** la libération de la chambre d'étanchéité est effectuée automatiquement par une bague à ressorts.

4. Utilisation du procédé selon l'une quelconque des revendications 1 à 3 aux fins de la production d'éléments de connexion à fiches pour des conduites d'eau potable ou d'eaux usées, pour des tubes électriques de protection, des conduites de fluide, telles que des conduites de gaz, de gaz d'échappement, d'air ou de pression.
